# EUROPEAN PATENT SPECIFICATION

(11) **EP 4 622 834 B1**
(45) Date of publication and mention of the grant of the patent: **22.07.2026**
(21) Application number: 23813486.0
(22) Date of filing: 23.11.2023
(51) Int. Cl.: B60R 13/02, B60R 5/04

(54) **CONNECTION DEVICE FOR FIXING AN UPPER PART AND LOWER PART OF A LINER OF A DOOR OF A VEHICLE**
VERBINDUNGSVORRICHTUNG ZUR BEFESTIGUNG EINES OBERTEILS UND EINES UNTERTEILS EINER AUSKLEIDUNG EINER TÜR EINES FAHRZEUGS
DISPOSITIF DE RACCORDEMENT PERMETTANT DE FIXER UNE PARTIE SUPÉRIEURE ET UNE PARTIE INFÉRIEURE D'UN REVÊTEMENT INTÉRIEUR D'UNE PORTIÈRE D'UN VÉHICULE

(30) Priority: 24.11.2022 IT 202200024201
(43) Date of publication of application: 01.10.2025
(73) Proprietor: MASERATI S.p.A., 41121 Modena (IT)
(72) Inventor: NOCERINO, Antonio, 80049 Somma Vesuviana (Napoli) (IT)
(74) Representative: Verdecchia, Valerio
(86) International application number: PCT/IB2023/061825
(87) International publication number: WO 2024/110910

(56) References cited:
- EP-B1- 2 340 373
- CN-U- 201 633 636
- DE-A1- 10 044 826
- DE-A1- 10 249 993

## Description

The present invention relates to a vehicle door inner liner assembly having a connection device for fixing an upper part and lower part of the inner liner to each other, preferably of an upright of a door, such as, for example, a rear door for access to a luggage compartment of a vehicle, for example of an automobile.

Generally, the rear door for access to the luggage compartment of a vehicle, comprises an outer part, the so-called chassis or body part, and an inner so-called liner part that is fixed to the outer part. In general, the inner part, or the inner liner comprises an upper part and a lower part, in the sense of a part that is found to be respectively higher or lower when the rear door is closed. Clearly, the rear door also comprises a glass part, the rear window, wherein the upper part and the lower part have to be connected to each other without obstructing the visibility through the rear window and without leading to structural weakening in proximity to the rear window. Typically, the upper part of the inner liner extends upwards as a C shape from the rear window, and delimits its lateral and upper edges, whilst the lower part of the liner extends downwards from the rear window, and delimits its lower edge. The lower and upper liner parts are connected to each other in proximity to, or consequently at the lower angles of the rear window. According to the prior art, it is possible to connect the two parts to each other by means of hidden fastenings (for example metallic or plastic clips), or by means of a visible threaded mechanical connection element (for example a screw) that has, however, an impact upon the qualitative perception of the customer. In the case wherein the fixing is envisaged of an element that is additional to one of the two components requiring a protrusion or recess whereupon to engage itself by means of a third element, the prior art provides for the possibility of placing a metal pin in one of these parts. Clearly, in this case, the pin has to be sufficiently robustly made, and therefore generally of a metallic material. Conversely, the upper and lower inner liner parts are generally made of a plastic material. Placing a metallic pin in such plastic material results in structural weakening of the inner liner and therefore results in disadvantages, this without considering the increased complexity associated with the manufacturing process of the components which are then difficult to connect to each other. Additionally, the aesthetic appeal of the metallic pin protruding from the plastic inner liner is such that it worsens the perception of the user. With other solutions according to the prior art, it is possible to construct, by means of a special plastic material injection moulding, the upper and lower parts of the liner in such a way that they may have a recess-shaped feature, adapted to receive the protrusion and to allow for form fitting of the lower part with the upper part. Clearly, such form fitting has nonetheless to be robust and not easy to dismantle for a user. Such form fitting would require a rather complicated mould with exorbitant costs, and therefore this solution is not generally implemented today. Alternatively, it may be possible to use a metallic pin that has previously been embedded in plastics and then injection moulded together with one of between the lower part and the upper part. The two parts may be connected to each other in this way, but not in a robust and reliable manner. Such a solution though, also requires a rather complicated mould shape and an unconventional moulding method, resulting in costs that are too high for mass industrial applications, and therefore this solution is also not generally implemented today.

Known examples of vehicle rear door inner liner assemblies are shown in DE 100 44 826 A1, that corresponds to the preamble of claim 1, while relating connection devices are shown in EP 2 340 373 B1, DE 102 49 993 A1 and CN 201 633 636 U.

There is therefore the need of a solution for connecting the lower and upper parts of the inner liner of the door of a vehicle that is cheap, easily made and of proven robustness.

The object of the present invention is that of providing such a solution that does not therefore suffer the disadvantages of the prior art.

This and other objects are fully achieved according to this invention by virtue of an inner liner assembly having a connection device as defined in the appended independent claim 1. Advantageous embodiments of the connection device according to the invention are specified in the dependent claims, the content whereof is to be understood as an integral part of the description that follows.

In summary, the invention is based upon the idea of providing a vehicle rear door inner liner assembly comprising an upper part, a lower part, and a connection device arranged so as to fix the upper part and the lower part of the inner liner to each other, the connection device comprising:
- a pin made of a plastic material, extending along an axis, and comprising a body and a handle part which are made integrally with each other by means of a method of injection moulding;
- a screw, comprising a head part and a rod part, wherein the head part is arranged so that during said method of injection moulding the head part stays at least partially embedded in the body of the pin, and wherein the rod part has a thread on its outer surface;
   wherein the body of said pin has, on its outer surface, ribs and/or lightening recesses made by means of said method of injection moulding.

According to a preferable embodiment of the invention, the handle part of the pin has a recess adapted to accommodate a screwing tool to allow screwing of said screw in a hole of said upper part of the inner liner of the door of the vehicle. In such case, preferably, such recess extends for at least half of the length of the pin along the direction of the axis, and, even more preferably, for essentially the whole length of the handle part of the pin along the direction of the axis. Advantageously, such recess is a hexalobular internal seat for nuts or screws according to the international standard defined by ISO 10664, or it has a cross-sectional shape of a six points star on a plane which is perpendicular to said axis, or in a Torx shape.

According to one preferred embodiment of the invention, the outer surface of the handle part has a milling, preferably adapted to emit audible feedback when coming into contact with an element, or at least a notch, for example in order to facilitate the positioning of an outer element that collaborates with such milling or with the at least one notch.

According to one preferred embodiment of the invention the body of the pin has a shoulder surface, preferably of an essentially annular shape, extending essentially on a plane which is perpendicular to the axis and adapted to abut against a respective surface of the lower part of the inner liner of the door of the vehicle.

Preferably, the assembly further comprises an interface element interposed between the upper part and the connection device to allow for screwing the screw of the device with the upper part. In such case, still more preferably, the interface element comprises a plate having a shape that is adapted to interlock with the upper part and a threaded hole, adapted to accommodate the screw of the device when screwed, and the plate extends essentially in a transverse direction relative to said threaded hole.

Further features and advantages of the present invention will appear more clearly from the following detailed description, given by way of non-limiting example, with reference to the accompanying drawings, in which:
Figure 1 is a perspective view of a rear door of a vehicle, viewed from the outside;
Figure 2 is a perspective view of the door of Figure 1, viewed from the inside, in a configuration wherein the luggage compartment is open and the door is thus raised;

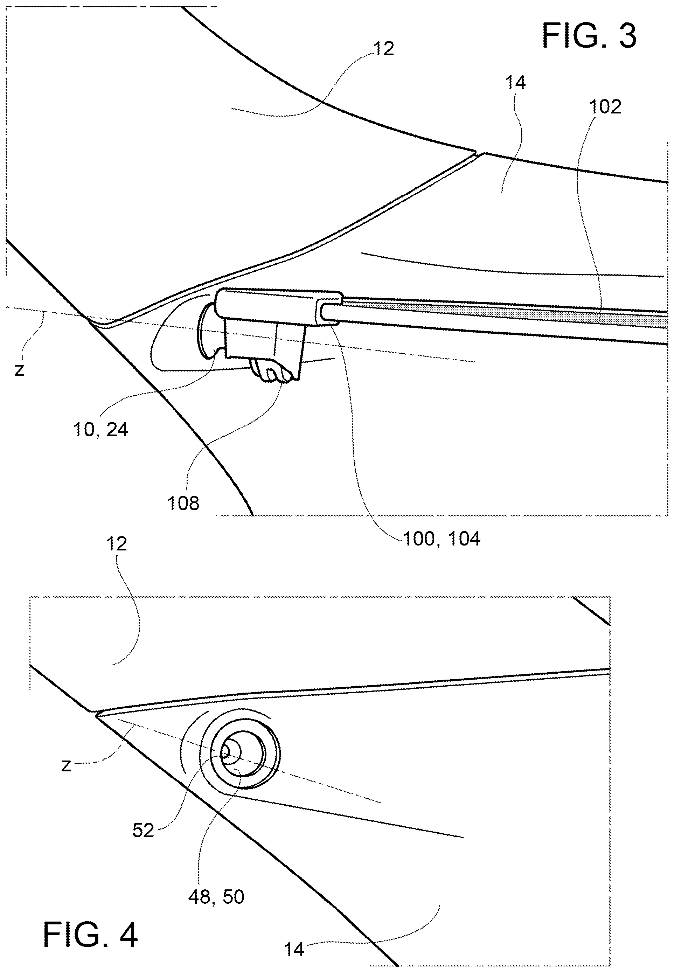

Figure 3 is a perspective view of a detail from the inside of the door of Figure 2;
Figure 4 is the view of Figure 3 wherein, for clarity of visualization, the pin of the connection device, a latching device A and a luggage compartment covering panel B have been omitted;
Figure 5 is a sectional view on a plane passing through the axis of the pin of the connection device of that shown in Figure 3, wherein, for clarity, the latching device A and the covering panel B have been omitted;
Figure 6 is a sectional view on a plane that is perpendicular to the axis of the pin of the connection device of that shown in Figure 3;
Figure 7 is a perspective view of that shown in Figure 3, wherein for clarity, the latching device A and the covering panel B have been omitted and wherein the lower part of the inner liner is shown as being transparent;
Figure 8 shows three views of the connection device according to an embodiment of the invention, and in particular a sectional view along a plane passing through the axis of the pin of the connection device (top right), and a complete perspective view of the connection device (bottom left), and a perspective view of the connection device in which the pin is shown as being partially transparent (bottom right);
Figure 9 is a perspective view that shows a moment during the mounting of the connection device in the configuration of Figure 4; and
Figure 10 is a perspective view that shows in isolation the latching device 100 and the covering panel 102.

With reference to the figures, the connection device part of the assembly according to the invention is indicated generally with the numeral 10.

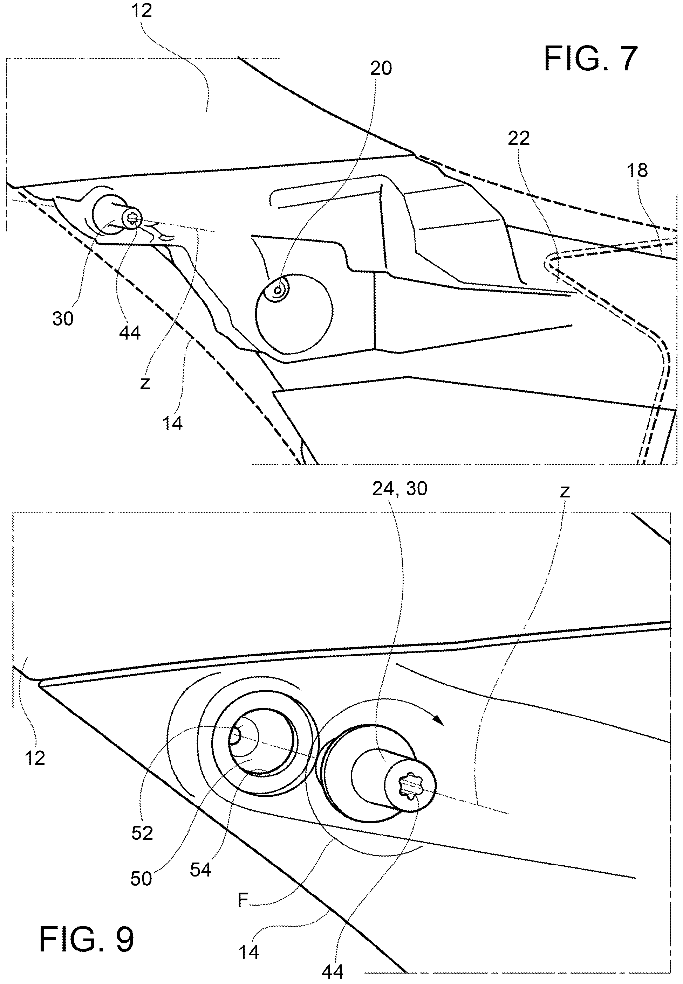

The connection device 10 may be used to fix to each other, as mentioned, an upper part 12 and a lower part 14 of an inner liner of a door 16, preferably the rear door, or the luggage compartment access door, of a vehicle, preferably an automobile. As may be seen from Fig-ure 2, and in more detail from Figure 7, the upper part 12 of the inner liner is also fixed to the part of the bodywork 18 of the door 16, by means of a screw 20. A further screw 22, is screwed into a threaded hole, sequentially, through the lower part 14, the upper part 12 and the bodywork 18 (see figure 7) in order to connect them to each other in a fixed manner. The relative arrangement between the connection device 10 and the lower part 12 and the upper part 14 will be described in detail hereafter.

According to the invention, the connection device 10 essentially comprises a pin 24 and a screw 26, which are bound to each other insofar as they are integrally connected as a single piece by means of a combined method of injection moulding.

The pin 24, made of a plastic material, extends with an essentially cylindrical shape along an axis z, and essentially comprises a body 28 and a handle part 30, the two portions being made integrally with each other by means of a method of injection moulding wherein also the screw is injection moulded therewith.

The body 28 is made in such a way as to have, on the outer surface 28a, a plurality of strengthening elements, such as for example ribs 32 and/or lightening recesses 34. Such ribs 32 and/or lightening recesses 34 are also made at the same time as the rest of the pin 24, during the same plastic material injection moulding procedure. Such ribs 32 and/or lightening recesses 34 are made in such a way as to ensure adequate retention of the screw 26 within the mould as well as the accurate coaxiality of the screw 26 and the pin 24.

From the closest side to the handle part 30, the body 28 has, preferably, a shoulder surface 36. The shoulder surface 36 essentially extends on a plane that is perpendicular to the axis z, in such a way as to be adapted to abut against an abutment surface in order to block the position of the pin 24 in the direction of the axis z when the pin 24 is inserted into a hole. Preferably, the shoulder surface 36 has an essentially annular crown shape.

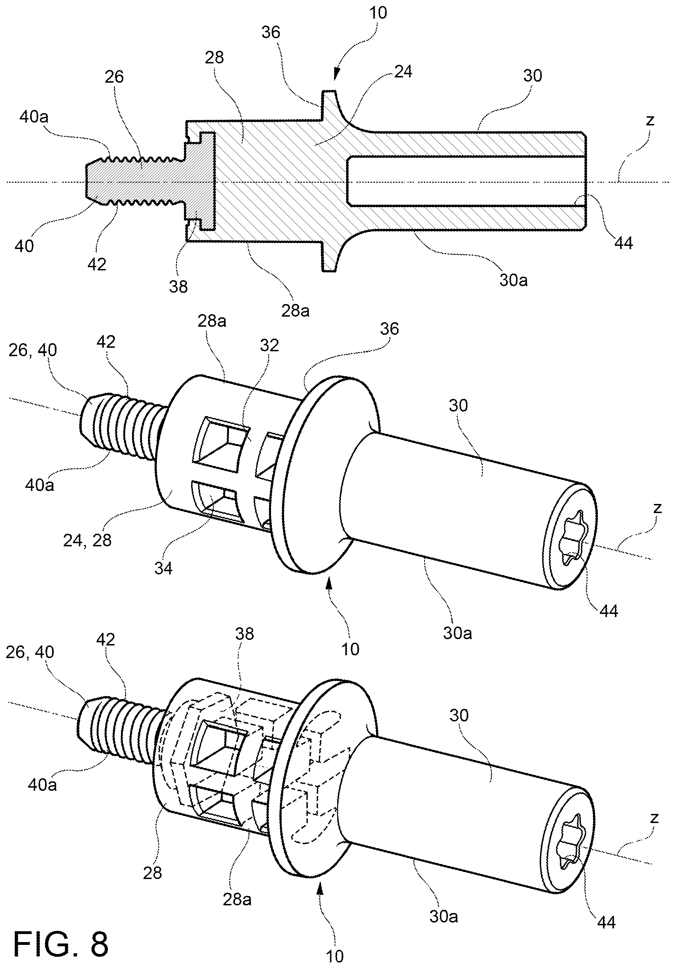

The screw 26 is made of a metallic material, essentially in the form of a conventional screw; in the example shown in Figure 8 it is made in the form of non-countersunk hexagonal head screw and with a threaded rod having a constant pitch, but it is not strictly necessary for the invention that it be thus. Conversely, the screw 26 may also be substituted for an equivalent threaded connection member.

In particular, the screw 26 has a head part 38 and a rod part 40, made integrally with each other.

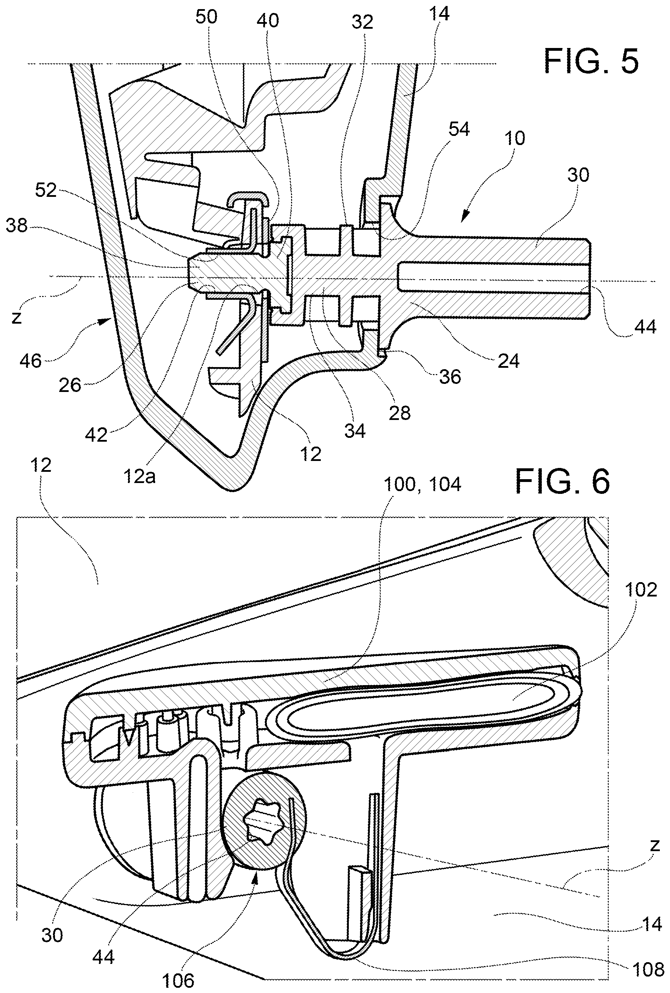

The head part 38, during the method of injection moulding adapted to make the pin 24, is arranged in such a way as to stay at least partially embedded within the body 28 of the pin 24. As may be seen in Figure 5, the head part 38 of the screw 26 is preferably made in such a way as to lightly protrude from the body 28 of the pin 24.

Conversely, the rod part 40 is arranged in such a way as to remain completely exposed with respect to the body 28 of the pin 24, or in any case to remain exposed for the greater part. On the outer surface 40a of the rod part 40 there is a thread 42 for the screwing of the screw 26, and, therewith, of the pin 24 which is integrally connected thereto. It is also possible, according to one embodiment of the invention, to use a threaded connection member that is different from the screw 26, but equivalent thereto, as long as such member may be moulded together with the pin 24 during the same injection moulding procedure and in such a manner that it may be embedded within the body 28 of the pin 24, with an orientation that is essentially coaxial to the pin 28, and in part at least partially protruding, with the thread 42 of the rod part 40 exposed at the side opposite the handle part 30 of the pin 24.

In order to facilitate the screwing of the pin 24, the handle part 30 may preferably have a recess 44 adapted to accommodate the screwing tool. Said recess 44 may extend, preferably, for at least half of the length of the pin 24 in the direction of the axis z. Even more preferably, the recess 44 may extend for essentially the entire length of the handle part 30 of the pin 24 in the direction of the axis z. As may be seen in the embodiment shown in Figure 8, the recess 44 may, for example, have the shape necessary for driving the rotation of the pin 24 by means of a Torx type tool, or it may have the shape of a hexalobular internal seat for nuts or screws according to the international standard defined by ISO 10664, or it may have the cross-sectional shape of a six points star on a plane that is perpendicular to the axis z, wherein the tips are more or less rounded or joined to each other. Alternatively, the recess 44 may have any form adapted to be driven by a known screwing tool. Alternatively, the recess 44 may be substituted by a prominent or protruding feature, in any case adapted to allow or facilitate the screwing of the screw 26 by imparting rotation, as shown by the arrow F in Figure 9, to the handle part 30 of the pin 24 which is integrally connected thereto.

The assembly 46 essentially comprises the lower part 14 and the upper part 12 of the inner liner of the door 16, as well as the connection device 10 according to a first aspect of the invention. Such device 10 is therefore arranged in such a way as to fix the upper part 12 and the lower part 14 to each other. In particular, the upper part 12 may have a hole 12a, adapted to accommodate the screw 26. In one preferred embodiment, the screw 26 is not directly screwable into the hole 12a but the assembly 46 further comprises an interface element 48 that is indeed interposed between the connection device 10 and the upper part 12. The interface element 48 comprises a plate 50 with a shape adapted to interlock, or make a form fitting, with the upper part 12, and a threaded hole 52 adapted to accommodate, indeed, the screw 26, and in particular the thread 42 of the rod part 40 of the screw 26. Clearly the screw 26 has to be arranged coaxially to the threaded hole 52, which is in turn arranged coaxially to the hole 12a of the upper part 12, and preferably, extends therewithin. Conversely instead, preferably, the plate 50 extends essentially in the transverse direction with respect to the threaded hole 52.

When present, during the mounting of the connection device 10, the shoulder surface 36 of the pin 24 is brought to abut against an abutment surface of the lower part 12 of the inner liner of the door 16, as shown in Figure 5. To this end, the lower part 12 has a non-threaded through hole 54 arranged coaxially to the threaded hole 52.

According to the most preferred embodiment of the invention, the assembly 46 is mounted in such a way that the connection device 10 is arranged with the screw 26 screwed into the threaded hole 52 of the interface element 48, which is in turn mounted interlocked on the upper part 12, whilst the pin 24 is arranged through the through hole 54 of the lower part 14. At the same time, the shoulder surface 36 of the body 28 of the pin 24 abuts against the abutment surface of the lower part 14 wherethrough the through hole 54 is obtained.

As previously mentioned, preferably the head part 38 of the screw 26 is made in such a way as to lightly protrude from the body 28 of the pin 24. By virtue of this preferable configuration, the head part 38 of the screw 26, when the connection device 10 is mounted within the assembly 46, abuts directly against the plate 50 thereby allowing for optimal tightness over time.

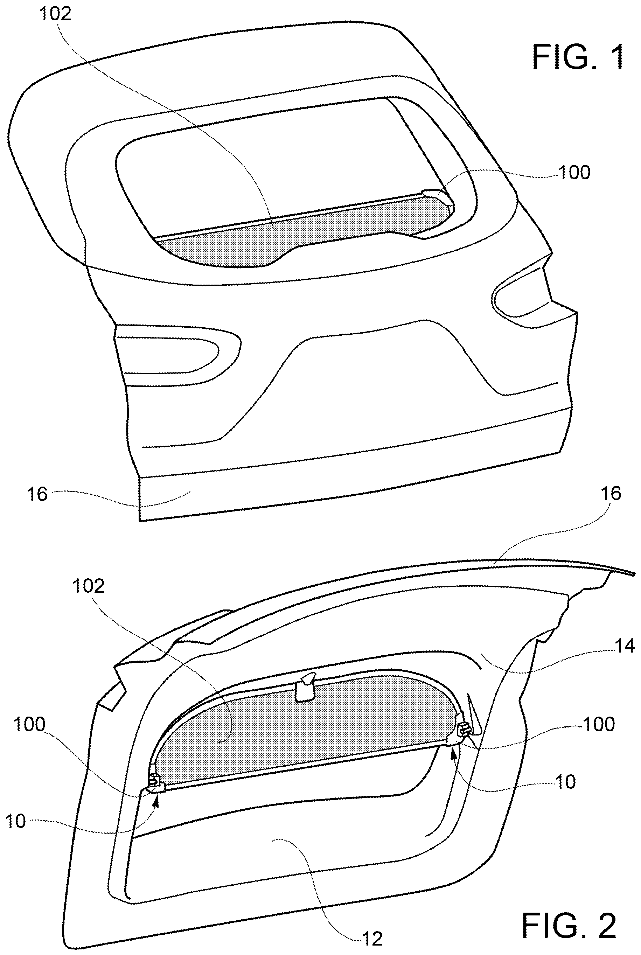

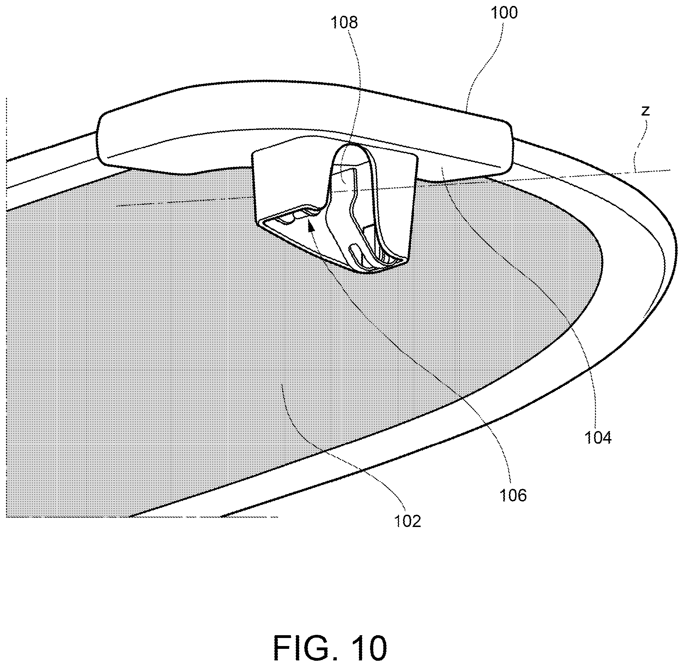

As may be seen in the figures from 1 to 3, in Figure 6, and in isolation in Figure 10, other than being used to fix the upper part 12 and the lower part 14 of the inner liner of the door 16 to each other, the connection device 10 may also have a further support function for maintaining in position a covering panel 102 of the luggage compartment adapted to be arranged just below the rear window in order to cover the luggage compartment. In particular, when the door 16 is a rear door for access to a luggage compartment of the vehicle it is possible to place two connection devices 10 at opposite sides of the door 16 of the vehicle, as shown in Figure 2, to connect, at two difference points, the upper part 12 and the lower part 14 of the inner liner of the door 16 to each other, and in such a way that the pin 24 of each of the two devices protrudes towards the luggage compartment, as shown in Figures 5 and 6. In particular, as may be seen in Figures 5 and 6, the protruding part of the pin 24 essentially comprises the handle part 30 when the shoulder surface 36 is resting on the abutment surface of the lower part 14. Each pin 24 protruding part may be interlocked into a relevant latching device 100. The latching device 100, in turn, supports the covering panel 102, or the covering panel 102 is bound to or interlocked with each latching device 100, and in particular a right-hand latching device 100 and a left-hand latching device 100 (see Figure 2). Each latching device 100 comprises a frame 104, wherein the covering panel 102 is supported or interlocked, an opening 106, and an elastic element 108. The opening 106 is adapted to accommodate the protruding part of the pin 24, whilst the elastic element 108 is arranged so as to normally hold the pin 24 down and hence interlocked with the opening 106 of the latching device 100. The configuration is such that in the mounted state, when the door 16 is closed, the opening 106 of each of the two latching devices 100 faces downwards and not in a direction that is parallel to the travel direction of the vehicle. The elastic element 108 is, for example, a spring.

Preferably, the outer surface 30a of the handle part 30 of the pin 24 has a milling, or a notch (not shown, but known per se) for adjusting the angular position of the covering panel 102.

As is clear from the foregoing description, the invention is easily applicable to a door of a vehicle and preferably to a rear door for access to a luggage compartment.

As is readily apparent from the foregoing description, the connection device according to the invention enables the objects of the invention to be achieved.

In particular, by virtue of the relative configuration of the pin and the screw, the connection device is simple and economical to manufacture and ensures adequate structural robustness.

Furthermore, by virtue of the manufacture by means of plastic material injection moulding, the pin, which emerges towards the luggage compartment, ensures better aesthetics.

Finally, in the case of damage or when it is necessary to carry out maintenance, the configuration of the connection device according to the invention makes it possible to easily substitute the device itself without requiring the dismantling or substitution of the remaining components of the door liner.

Of course, the principle of the invention being understood, the manufacturing details and the embodiments may vary widely with respect to that which is described and illustrated by way of non-limiting example only, without departing from the scope of the invention as defined in the accompanying claims.

## Claims

1. Vehicle rear door (16) inner liner assembly (46) comprising an upper part (12) and a lower part (14) and a connection device (10) arranged so as to fix said upper part (12) and said lower part (14) to each other, the connection device (10) comprising:
- a pin (24) made of plastic material, extending along an axis (z), and comprising a body (28) and a handle part (30) which are made integrally with each other by means of a method of injection moulding;
- a screw (26), comprising a head part (38) and a rod part (40), wherein the head part (38) is arranged so that during said method of injection moulding the head part (38) stays at least partially embedded in the body (28) of the pin (24), and wherein the rod part (40) has a thread (42) on its outer surface (40a);
**characterized in that** the body (28) of said pin (24) has, on its outer surface (28a), ribs (32) and/or lightening recesses (34) made by means of said method of injection moulding.

2. Inner liner assembly according to claim 1, wherein the handle part (30) of the pin (24) has a recess (44) adapted to accommodate a screwing tool to allow for screwing said screw (26) in a hole (12a) of said upper part (12) of the inner liner of the rear door (16) of the vehicle.

3. Inner liner assembly according to claim 2, wherein said recess (44) extends for at least half of the length of the pin (24) along the direction of the axis (z), and preferably for essentially the whole length of the handle part (30) of the pin (24) along the direction of the axis (z).

4. Inner liner assembly according to claim 2 or to claim 3, wherein said recess (44) is a hexalobular internal seat for nuts or screws according to the international standard defined by ISO 10664, or has a cross-sectional shape of a six points star on a plane perpendicular to said axis (z).

5. Inner liner assembly according to any of the preceding claims, wherein the outer surface (30a) of the handle part (30) of the pin (24) has a milling or has at least a notch.

6. Inner liner assembly according to any of the preceding claims, wherein the body (28) of the pin (24) has a shoulder surface (36), extending essentially on a plane that is perpendicular to the axis (z) and adapted to abut against a surface of said lower part (14) of the inner liner of the rear door (16) of the vehicle.

7. Inner liner assembly according to any of the preceding claims, further comprising an interface element (48) interposed between said upper part (12) and said connection device (10) to allow for screwing the screw (26) of the connection device (10) with said upper part (12), wherein the interface element (48) comprises a plate (50) having a shape adapted to interlock with said upper part (12) and a threaded hole (52), adapted to accommodate said screw (26) of the connection device (10) when screwed, wherein the plate (50) extends essentially in a transverse direction relative to said threaded hole (52).

## Patentansprüche

1. Fahrzeug-Hecktürinnenverkleidungsanordnung (46), umfassend ein Oberteil (12) und ein Unterteil (14) sowie eine Verbindungsvorrichtung (10), die derart angeordnet ist, dass sie das genannte Oberteil (12) und das genannte Unterteil (14) miteinander befestigt, wobei die Verbindungsvorrichtung (10) umfasst:
einen aus Kunststoffmaterial hergestellten Stift (24), der sich entlang einer Achse (z) erstreckt und einen Körper (28) sowie einen Griffteil (30) umfasst, die mittels eines Spritzgießverfahrens integral miteinander hergestellt sind;
eine Schraube (26), umfassend einen Kopfteil (38) und einen Schaftteil (40), wobei der Kopfteil (38) derart angeordnet ist, dass während des genannten Spritzgießverfahrens der Kopfteil (38) zumindest teilweise in den Körper (28) des Stifts (24) eingebettet bleibt, und wobei der Schaftteil (40) an seiner Außenfläche (40a) ein Gewinde (42) aufweist;
**dadurch gekennzeichnet, dass** der Körper (28) des genannten Stifts (24) an seiner Außenfläche (28a) Rippen (32) und/oder Gewichtsreduzierungsvertiefungen (34) aufweist, die mittels des genannten Spritzgießverfahrens hergestellt sind.

2. Innenverkleidungsanordnung nach Anspruch 1, wobei der Griffteil (30) des Stifts (24) eine Vertiefung (44) aufweist, die dazu geeignet ist, ein Schraubwerkzeug aufzunehmen, um das Einschrauben der genannten Schraube (26) in eine Bohrung (12a) des genannten Oberteils (12) der Innenverkleidung der Hecktür (16) des Fahrzeugs zu ermöglichen.

3. Innenverkleidungsanordnung nach Anspruch 2, wobei sich die genannte Vertiefung (44) über mindestens die Hälfte der Länge des Stifts (24) entlang der Richtung der Achse (z) erstreckt und vorzugsweise im Wesentlichen über die gesamte Länge des Griffteils (30) des Stifts (24) entlang der Richtung der Achse (z).

4. Innenverkleidungsanordnung nach Anspruch 2 oder Anspruch 3, wobei die genannte Vertiefung (44) ein hexalobularer Innenaufnahmebereich für Muttern oder Schrauben gemäß dem durch ISO 10664 definierten internationalen Standard ist oder eine Querschnittsform eines sechsstrahligen Sterns auf einer Ebene senkrecht zu der genannten Achse (z) aufweist.

5. Innenverkleidungsanordnung nach einem der vorhergehenden Ansprüche, wobei die Außenfläche (30a) des Griffteils (30) des Stifts (24) eine Rändelung aufweist oder zumindest eine Kerbe aufweist.

6. Innenverkleidungsanordnung nach einem der vorhergehenden Ansprüche, wobei der Körper (28) des Stifts (24) eine Schulterfläche (36) aufweist, die sich im Wesentlichen auf einer zur Achse (z) senkrechten Ebene erstreckt und dazu geeignet ist, gegen eine Fläche des genannten Unterteils (14) der Innenverkleidung der Hecktür (16) des Fahrzeugs anzuliegen.

7. Innenverkleidungsanordnung nach einem der vorhergehenden Ansprüche, ferner umfassend ein Schnittstellenelement (48), das zwischen dem genannten Oberteil (12) und der genannten Verbindungsvorrichtung (10) angeordnet ist, um das Einschrauben der Schraube (26) der Verbindungsvorrichtung (10) mit dem genannten Oberteil (12) zu ermöglichen, wobei das Schnittstellenelement (48) eine Platte (50) umfasst, die eine Form aufweist, die dazu geeignet ist, mit dem genannten Oberteil (12) formschlüssig ineinanderzugreifen, sowie eine Gewindebohrung (52), die dazu geeignet ist, die genannte Schraube (26) der Verbindungsvorrichtung (10) im eingeschraubten Zustand aufzunehmen, wobei sich die Platte (50) im Wesentlichen in einer Querrichtung relativ zu der genannten Gewindebohrung (52) erstreckt.

## Revendications

1. Ensemble de revêtement intérieur (46) d'une portière arrière (16) de véhicule comprenant une partie supérieure (12) et une partie inférieure (14) et un dispositif de raccordement (10) agencé de manière à fixer ladite partie supérieure (12) et ladite partie inférieure (14) l'une à l'autre, le dispositif de raccordement (10) comprenant :
une goupille (24) réalisée en matériau plastique, s'étendant le long d'un axe (z), et comprenant un corps (28) et une partie poignée (30) qui sont réalisés intégralement l'un avec l'autre au moyen d'un procédé de moulage par injection ;
une vis (26), comprenant une partie tête (38) et une partie tige (40), dans lequel la partie tête (38) est agencée de sorte que pendant ledit procédé de moulage par injection la partie tête (38) reste au moins partiellement noyée dans le corps (28) de la goupille (24), et dans lequel la partie tige (40) présente un filetage (42) sur sa surface extérieure (40a) ;
**caractérisé en ce que** le corps (28) de ladite goupille (24) présente, sur sa surface extérieure (28a), des nervures (32) et/ou des évidements d'allègement (34) réalisés au moyen dudit procédé de moulage par injection.

2. Ensemble de revêtement intérieur selon la revendication 1, dans lequel la partie poignée (30) de la goupille (24) présente un évidement (44) adapté pour recevoir un outil de vissage afin de permettre le vissage de ladite vis (26) dans un trou (12a) de ladite partie supérieure (12) du revêtement intérieur de la portière arrière (16) du véhicule.

3. Ensemble de revêtement intérieur selon la revendication 2, dans lequel ledit évidement (44) s'étend sur au moins la moitié de la longueur de la goupille (24) selon la direction de l'axe (z), et de préférence sur essentiellement toute la longueur de la partie poignée (30) de la goupille (24) selon la direction de l'axe (z).

4. Ensemble de revêtement intérieur selon la revendication 2 ou selon la revendication 3, dans lequel ledit évidement (44) est un logement interne hexalobulaire pour écrous ou vis selon la norme internationale définie par l'ISO 10664, ou présente une forme en section d'une étoile à six branches sur un plan perpendiculaire audit axe (z).

5. Ensemble de revêtement intérieur selon l'une quelconque des revendications précédentes, dans lequel la surface extérieure (30a) de la partie poignée (30) de la goupille (24) présente un moletage ou présente au moins une encoche.

6. Ensemble de revêtement intérieur selon l'une quelconque des revendications précédentes, dans lequel le corps (28) de la goupille (24) présente une surface d'épaulement (36), s'étendant essentiellement sur un plan perpendiculaire à l'axe (z) et adaptée pour venir en butée contre une surface de ladite partie inférieure (14) du revêtement intérieur de la portière arrière (16) du véhicule.

7. Ensemble de revêtement intérieur selon l'une quelconque des revendications précédentes, comprenant en outre un élément d'interface (48) interposé entre ladite partie supérieure (12) et ledit dispositif de raccordement (10) afin de permettre le vissage de la vis (26) du dispositif de raccordement (10) avec ladite partie supérieure (12), dans lequel l'élément d'interface (48) comprend une plaque (50) présentant une forme adaptée pour s'emboîter avec ladite partie supérieure (12) et un trou fileté (52), adapté pour recevoir ladite vis (26) du dispositif de raccordement (10) lorsqu'elle est vissée, dans lequel la plaque (50) s'étend essentiellement dans une direction transversale par rapport audit trou fileté (52).
